# EUROPÄISCHE PATENTSCHRIFT

(11) **EP 0 849 969 B1**
(45) Veröffentlichungstag und Bekanntmachung des Hinweises auf die Patenterteilung: **22.06.2005**
(21) Anmeldenummer: 97120493.8
(22) Anmeldetag: 21.11.1997
(51) Int. Cl.: H04Q 11/04, H04L 12/56

(54) **Verfahren zum optimierten Übertragen von ATM-Zellen über Verbindungsabschnitte**
Procedure for the optimized transfer of ATM cells over connection links
Méthode pour le transfert optimisé des cellules ATM sur des liaisons de connection

(30) Priorität: 19.12.1996 DE 19653118
(43) Veröffentlichungstag der Anmeldung: 24.06.1998
(73) Patentinhaber: SIEMENS AKTIENGESELLSCHAFT, 80333 München (DE)
(72) Erfinder: Schneeberger, Stefan, Dr.-Ing., 85591 Vaterstetten (DE)

(56) Entgegenhaltungen:
- EP-A- 0 498 092
- EP-A- 0 748 086
- ROBERTS J W: "VIRTUAL SPACING FOR FLEXIBLE TRAFFIC CONTROL" INTERNATIONAL JOURNAL OF COMMUNICATION SYSTEMS, WILEY, CHICHESTER, GB, Bd. 7, Nr. 4, 1. Oktober 1994 (1994-10-01), Seiten 307-318, XP000672879 ISSN: 1074-5351
- NIELSEN J V ET AL: "VLSI IMPLEMENTATION OF A FAIRNESS ATM BUFFER SYSTEM" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, Bd. 2, 23. Juni 1996 (1996-06-23), Seiten 681-686, XP000625862 ISBN: 0-7803-3251-2
- ROBERTS J W ET AL: "A REAL TIME SORTER WITH APPLICATION TO ATM TRAFFIC CONTROL" ISS '95. WORLD TELECOMMUNICATIONS CONGRESS. (INTERNATIONAL SWITCHING SYMPOSIUM). ADVANCED SWITCHING TECHNOLOGIES FOR UNIVERSAL TELECOMMUNICATIONS AT THE BEGINNING OF THE 21ST. CENTURY. BERLIN, APR. 23 - 28, 1995, PROCEEDINGS OF THE INTERNATIONAL SWIT, Bd. 1 SYMP. 15, 23. April 1995 (1995-04-23), Seiten 258-262, XP000495575 ISBN: 3-8007-2093-0

## Beschreibung

Die Erfindung betrifft ein Verfahren gemäß des Patentanspruchs 1.

Bei zeitgemäßen Paketvermittlungssystemen werden Informationen in Datenpaketen übertragen. Als Beispiel hierfür seien ATM-Zellen genannt. Diese weisen einen Kopfteil sowie einen Informationsteil auf. Im Kopfteil sind verbindungsrelevante Informationen und im Informationsteil die zu übertragenden Nutzdaten abgespeichert. Die eigentliche Übertragung erfolgt in der Regel über Verbindungsabschnitte zwischen Sender und Empfänger. Dabei besteht gegebenenfalls das Erfordernis, die Verbindungsabschnitte derart auszunutzen, daß eine Mehrzahl von Sendeeinrichtungen die von diesen ausgehenden Zellenströmen über denselben Verbindungsabschnitt übertragen.

Um die Übertragung der jeweiligen Zellenströme entsprechend den Erfordernissen der einzelnen Zellenströme durchführen zu können, ist beim Stand der Technik ein Kalendermechanismus vorgeschlagen worden. Die entsprechenden Verhältnisse sind in der europäischen Patentschrift EP 0 498 092 näher erläutert. Hier wird durch Einträge im Kalender die verbindungsindividuell festgelegte Übertragungsbitrate strikt begrenzt. Dabei besteht jedoch das Problem, daß für jeden Zeitschlitz Kalendereinträge durchgeführt werden müssen. Damit entsteht aber eine gewisse Ungenauigkeit in der Zeit, da jeweils einem Zeitschlitz des Kalenders in diesem Fall eine Mehrzahl von ATM-Zellen zugeordnet ist, was sich gegebenenfalls dynamisch ungünstig auswirkt.

Aus der Druckschrift Nielsen J V et al.: "VLSI Implementation of a fairness ATM Buffer System", 1996 IEEE International Conference on Communications (ICC). Converging Technologies for Tomorrow's Applications. Dallas, June 23 - 27, 1996, IEEE International Conference on Communications (ICC), New York, IEEE, US, Bd. 2, 23. Juni 1996 (1996-06-23), Seiten 681-686, XP000625862 ISBN: 0-7803-3251-2 ist ein Verfahren zum Übertragen von ATM-Zellen über Verbindungsabschnitte bekannt. Demgemäss wird ein Multiplexen auf Basis des Weighted fair queueing Verfahren angesprochen. Obwohl dieses Verfahren für ATM-Netze robust ist, weist es jedoch im Hinblick auf die Dynamik der Übertragung von ATM-Zellen Nachteile auf.

Der Erfindung liegt die Aufgabe zugrunde, einen Weg aufzuzeigen, wie das Übertragen von ATM-Zellen über Verbindungsabschnitte noch optimaler gestaltet werden kann.

Vorteilhaft an der Erfindung ist insbesondere, dass eine Verbindungsinformation zusammen mit einer zeitlichen Markierung in einer sortierten Liste nach Maßgabe einer vorgegebenen Ordnungsvorschrift abgespeichert wird. Damit wird die Dynamik des Systems erhöht sowie der Aufwand an Hardware vermindert.

Vorteilhafte Ausgestaltungen der Erfindung sind in den Unteransprüchen angegeben.

Die Erfindung wird im Folgenden anhand eines figürlich dargestellten Ausführungsbeispiels näher erläutert.

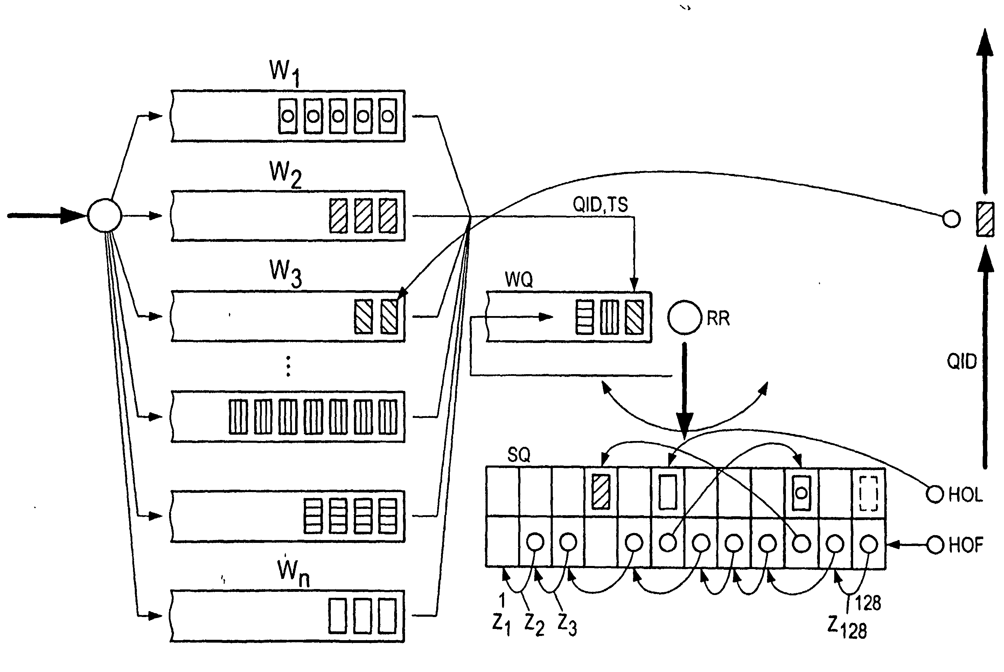

In der Figur sind Vorrichtungen aufgezeigt, auf denen das erfindungsgemäße Verfahren zum Ablauf gelangt. Demgemäß sind Warteschlangen W₁...Wₙ offenbart, die als FIFO-Speicher ausgebildet sind. Darin werden verbindungsindividuell ATM-Zellen gespeichert. Demgemäß sind in der Warteschlange W₁ ATM-Zellen gespeichert, die zu einer Verbindung mit der Nummer 1 gehören. In der Warteschlange W₂ sind ATM-Zellen gespeichert, die zu einer Verbindung mit der Nummer 2 gehören, etc. Die ATM-Zellen führen Verbindungsinformationen QID mit. Diese wird jeweils beim Aufbau einer Verbindung festgelegt und den darüber geleiteten ATM-Zellen mitgegeben. In den Warteschlangen W₁...Wₙ sind nun die ATM-Zellen gespeichert, deren Verbindungsinformation QID in einer nachgeschalteten Schedulingeinrichtung gespeichert und behandelt wird (backlogged connections).

Die nachgeschaltete Schedulingeinrichtung wird von einer weiteren Warteschlange WQ, einem Sortierer RR sowie einer Sortiervorrichtung SQ gebildet. In der Warteschlange WQ sowie der Sortiervorrichtung SQ sind die Verbindungsinformation QID zusammen mit einer zugeordneten zeitlichen Markierung TS enthalten. Erstere wird nach Maßgabe des erfindungsgemäßen Verfahrens einer in einer der Warteschlangen W₁...Wₙ anstehenden ATM-Zelle entnommen und an das obere Ende der Warteschlange WQ gespeichert. Zeitlich hierzu wird der entnommenen Verbindungsinformation QID die zeitliche Markierung TS zugeordnet. Bei letzterer handelt es sich um den Zeitpunkt, an dem die betreffende zugeordnete ATM-Zelle spätestens auf den Verbindungsabschnitt gemultiplext und weiteren Einrichtungen zugeführt werden soll. Die Entnahme einer Verbindungsinformation QID aus einer in einer der Warteschlangen W₁...Wₙ anstehenden ATM-Zellen erfolgt dabei nach Maßgabe zweier, noch näher zu spezifizierenden Entnahmekriterien.

Die Sortiervorrichtung SQ ist ferner als verkettete Liste organisiert und weist gemäß vorliegendem Ausführungsbeispiel insgesamt 128 Speicherelemente auf. Pro Speicherelement sind damit 3 Parameter abgelegt, und zwar die Verbindungsinformation QID, die jeweils zugeordnete zeitliche Markierung TS sowie ein Zeiger Zₓ, der auf ein anderes Speicherelement deutet und somit die einzelenen Glieder der verketteten Liste miteinander verbindet. Schließlich ist ein Zeiger HOL definiert, der stets auf das Speicherelement deutet, in dem die Verbindungsinformation QID mit dem geringsten Zeitwert TS enthalten ist. Ferner wird noch ein Zeiger HOF definiert, der jeweils auf ein leeres Speicherelement deutet.

Um zu entscheiden, welche in den Warteschlangen W₁...Wₙ gespeicherten ATM-Zellen zu welchem Zeitpunkt auf weitere Verbindungsabschnitte gemultiplext werden, werden nun eine Verbindungsinformation QID zusammen mit der jeweils zugeordneten zeitlichen Markierung TS dem erfindungsgemäßen Verfahrens unterworfen, das im folgenden beschrieben wird.

Demnach werden zunächst ATM-Zellen über Verbindungsabschnitte den Warteschlangen W₁...Wₙ zugeführt. Dabei kann eine Warteschlange gegebenenfalls einen leeren oder teilgefüllten Zustand aufweisen. Weist nun eine der Warteschlangen einen leeren Zustand auf und wird eine erste ATM-Zelle dieser Warteschlange zugeführt, so wird die darin enthaltene Verbindungsinformation QID unmittelbar zur Warteschlange WQ weitergeleitet und an oberster Stelle dieser Warteschlange eingetragen. Damit ist das erste Entnahmekriterium definiert, wonach die Verbindungsinformation QID der in einer der Warteschlangen anstehenden ATM-Zellen entnommen und der Warteschlange WQ zugeführt wird, falls diese ATM-Zelle einer leeren Warteschlange zugeführt wird.

Durch den Eintrag der ATM-Zelle an die oberste Stelle der Warteschlange WQ wird die höchste Bearbeitungspriorität durch den Sortierer RR definiert. Von diesem wird nun im folgenden geprüft, ob diese Verbindungsinformation QID der Sortiervorrichtung SQ zugeführt werden kann. Zu diesem Zweck werden eine Mehrzahl von Vergleichsoperationen durchgeführt. Gemäß vorliegendem Ausführungsbeispiel sollen insgesammt 8 dieser Vergleichsoperationen gesteuert werden. Weiterhin wird für die Durchführung dieser Vergleichsoperationen ein bestimmtes Zeitintervall Δt in Anspruch genommen. Kann die betreffende Verbindungsinformation QID nun innerhalb dieses Zeitintervalls nicht einsortiert werden, wird sie der obersten Stelle der Warteschlange WQ wieder entnommen und dem Ende der Warteschlange WQ zugeführt.

Das Kriterium, wonach eine Einsortierung vom Sortierer RR in die Sortiervorrichtung SQ gesteuert wird, ist die Größe des Zeitwertes TS, der der Verbindungsinformation QID zugeordnet ist. Zu diesem Zweck braucht vom Sortierer RR zunächst der oberste Eintrag in der Sortiervorrichtung SQ überprüft zu werden. Dies ist möglich, da die Sortiervorrichtung SQ als verkettete, bereits sortierte Liste organisiert ist. Der Zeiger HOL deutet dabei auf das Speicherelement, in dem die Verbindungsinformation QID mit dem geringsten Zeitwert TS abgelegt ist. Weist die neue Verbindungsinformation QID nun einen noch geringeren Zeitwert TS auf, so wird diese in eine durch den Zeiger HOF gekennzeichnetes freies Speicherelement eingeschrieben. Wenn der neue einzufügende Eintrag gemäß der Ordnungsvorschrift größer ist, wird unmittelbar zum nächsten Eintrag verzweigt, wo derselbe Vergleich durchgeführt wird. Gemäß vorliegendem Ausführungsbeispiel werden insgesamt 8 dieser Vergleiche durchgeführt. Wenn innerhalb dieser 8 Vergleichsoperationen diese neue Verbindungsinformation QID nicht in die sortierte Liste der Sortiervorrichtung SQ einsortiert werden kann, wird sie an das Ende der Warteschlange WQ für einen späteren Bedienvorgang zurückgeschrieben.

Als maximales Zeitintervall wird eine festgelegte Größe Δt vorgegeben. Läuft diese Zeitspanne ab, ohne daß eine Einsortierung erfolgt ist, so wird die betreffende Verbindungsinformation QID zusammen mit dem zugeordneten Zeitwert TS an das Ende der Wartschlange WQ gespeichert. Als Ergebnis der Vergleichsoperationen werden jedoch die Parameter des letzten Vergleiches gespeichert, so daß wenn diese Verbindungsinformation QID wieder an oberster Stelle der Warteschlange WQ steht, fortgefahren werden kann, ohne die bereits ausgeführten Vergleichsoperationen erneut durchführen zu müssen.

Erfolgt nun bei einer der insgesamt 8 Vergleichsoperationen innerhalb des Zeitintervalls Δt ein Eintrag in die Sortiervorrichtung SQ, so wird die betreffende Verbindungsinformation QID in ein durch den Zeiger HOF spezifiziertes leeres Speicherelement eingetragen. Da die Sortiervorrichtung SQ als verkettete Liste organisiert ist, müssen die Zeiger HOL, HOF sowie die auf die Verbindungsinformationen deutenden Zeiger Z₁...Z₁₂₈ umorganisiert werden.

Im folgenden wird nun die Verbindungsinformation QID mit dem geringsten Zeitwert der Sortiervorrichtung SQ entnommen. Bekanntlich ist diese in dem Speicherelement gespeichert, auf das der Zeiger HOL deutet. Nach Maßgabe der Verbindungsinformation QID wird nun die ATM-Zelle ermittelt, die dieser zugeordnet ist und auf weitere Verbindungsabschnitte gemultiplext. Da der Sortiervorrichtung SQ eine Verbindungsinformation QID entnommen wurde, weist diese jetzt gegebenenfalls keine Verbindungsinformation QID dieses Verbindungstyps auf. Aus diesem Grund wird eine Verbindungsinformation QID dieses Verbindungstyps von einer der Warteschlangen W₁...Wₙ nachgeladen, wodurch das zweite Entnahmekriterium definiert wird.

Abschließend sei noch das Beispiel einer Sprachverbindung aufgeführt. Eine solche Verbindung hat stets die höchste Priorität, die sich in der Berechnung von sehr kleinen Zeitwerten TS äußert. Wird eine einer Sprachverbindung zugehörige ATM-Zelle einer leeren Warteschlange Wₓ zugeführt, wird die zugehörige Verbindungsinformation QID sowie die zugeordnete zeitliche Markierung TS unmittelbar an das obere Ende der Wartschlange WQ eingeschrieben. Da sich nun diese an der Speicherstelle mit der höchsten Priorität befinden, werden diese sofort ausgelesen und überprüft, ob diese in der Sortiervorrichtung SQ eingeordnet werden kann. Da es sich um eine Sprachverbindung handelt, ist dies möglich, wobei die Verbindungsinformation QID sofort nach Umorganisation der Zähler entnommen und die zugeordnete ATM-Zelle gemultiplext wird. Es können auch mehrere oder alle Sprachverbindungen über dieselbe Warteschlange Wx dem Sortiere RR zugeführt werden.

Gemäß vorliegendem Ausführungsbeispiel wurde davon ausgegangen, daß die Sortiervorrichtung SQ 128 Speicherelemente aufweist. Dies bedeutet jedoch keine Einschränkung des erfindungsgemäßen Verfahrens, wie dies auch für die 8 Vergleichesoperationen gilt.

Durch die Realisierung der Schedulingeinrichtung aus Warteschlange WQ und Sortiervorrichtung SQ ist es nicht notwendig, für letztere soviele Speicherelemente vorzusehen, wie Verbindungen verwaltet werden sollen. Überlaufende Einträge in der Sortiervorrichtung SQ können in der Warteschlange WQ aufgefangen werden, was in der Praxis eine deutliche Einsparung an Hardewareeinrichtungen bedeutet.

## Patentansprüche

1. Verfahren zum optimierten Übertragen von ATM-Zellen über Verbindungsabschnitte,
mit einer Mehrzahl von Warteschlangen (W₁...Wₙ), in denen Verbindungsinformationen (QID) führende ATM-Zellen gespeichert sind, sowie mit einer Schedulingeinrichtung, die aus einer weiteren Warteschlange (WQ), einem Sortierer (RR) sowie eine Sortiervorrichtung (SQ) gebildet wird, und in der Verbindungsinformationen (QID) nach Maßgabe einer vorgegebenen Ordnungsvorschrift sortiert sind,
**dadurch gekennzeichnet,**
**dass** den in einer der Warteschlangen gespeicherten ATM-Zellen gegebenenfalls die Verbindungsinformation (QID) nach Maßgabe wenigstens eines für eine Warteschlange (W₁...Wₙ) oder für die Sortiervorrichtung (SQ) füllstandsabhängigen Entnahmekriteriums entnommen wird,
**dass** die Verbindungsinformation (QID) mit einer, für den Zeitpunkt, an dem die betreffende zugeordnete ATM-Zelle spätestens auf den Verbindungsabschnitt gemultiplext werden soll repräsentativen zeitlichen Markierung (TS) versehen wird und dem oberen Ende der weiteren Warteschlange (WQ) zugeführt wird, und
**dass** die Verbindungsinformation (QID) nach Maßgabe einer vorgegebenen Anzahl von Vergleichsoperationen unter Berücksichtigung der vorgegebenen Ordnungsvorschrift in die Sortiereinrichtung (SQ) eingefügt wird.

2. Verfahren nach Anspruch 1,
**dadurch gekennzeichnet,**
**daß** das wenigstens eine Entnahmekriterium derart ausgebildet ist, daß falls eine ATM-Zelle einer leeren Warteschlange (Wₓ) zugeführt wird, deren Verbindungsinformation (QID) zusammen mit der jeweils zugeordneten zeitlichen Markierung (TS) an das obere Ende der weiteren Warteschlange übertragen wird.

3. Verfahren nach Anspruch 1, 2,
**dadurch gekennzeichnet,**
**daß** ein weiteres Entnahmekriterium derart ausgebildet ist, daß die Verbindungsinformation (QID) lediglich dann der weiteren Warteschlange (WQ) zugeführt wird, wenn eine gleichartig ausgebildete Verbindungsinformation (QID) die Schedulingeinrichtung verlässt.

4. Verfahren nach Anspruch 1 bis 3,
**dadurch gekennzeichnet,**
**daß** die vorgegebene Anzahl von Vergleichsoperationen innerhalb einer definierten Zeitintervalls (Δt) durchgeführt wird.

5. Verfahren nach einem der vorstehenden Ansprüche,
**dadurch gekennzeichnet,**
**daß** die Sortiervorrichtung (SQ) als verkette Liste organisiert ist, wobei ein erster Zeiger (HOL) das obere Ende und ein zweiter Zeiger (HOF) freie Speicherelemente definiert.

6. Verfahren nach einem der vorstehenden Ansprüche,
**dadurch gekennzeichnet,**
**daß** die vorgegebenen Ordungsvorschrift derart ausgebildet ist, daß der den Verbindungsinformationenen (QID) zugewiesene Zeitwert (TS) in vorgegebener Reihenfolge organisiert ist.

## Claims

1. Method for optimized transmission of ATM cells over connection sections,
with a plurality of queues (W₁...Wₙ), in which ATM cells carrying connection information (QID) are stored, as well as with a scheduling device formed from a further queue (WQ), a rerouter (RR) as well as a sort queue (SQ), and in which connection information (QID) is sorted in accordance with a prespecified set of rules,
**characterized in that**
if necessary the connection information (QID) is removed from ATM cells stored in one of the queues in accordance with at least one level-dependent removal criterion for a queue (W₁...Wₙ) or for the sort queue (SQ),
the connection information (QID) is provided with a time stamp (TS) representing the latest point at which the relevant assigned ATM cell is to be multiplexed onto the connection section and is routed to the top end of the further queue (WQ), and
the connection information (QID) is inserted into the sort queue (SQ) in accordance with a prespecified number of compare operations, taking into account the prespecified set of rules.

2. Method according to Claim 1,
**characterized in that**
the at least one removal criterion is embodied such that, if an ATM cell is routed to an empty queue (W_{X}), its the connection information (QID) together with the relevant time stamp (TS) assigned, is transferred to the top end of the further queue.

3. Method in accordance with Claim 1, 2
**characterized in that**
a further removal criterion is embodied such that the connection information (QID) is only routed to the further queue (WQ) if a similarly embodied connection information (QID) leaves the scheduling device.

4. Method in accordance with Claim 1 to 3,
**characterized in that**
the prespecified number of compare operations is executed within a defined time interval (At).

5. Method in accordance with one of the previous claims,
**characterized in that**,
the sort queue (SQ) is organized as a linked list, with a first pointer (HOL) defining the upper end and a second pointer (HOF) defining free storage elements.

6. Method in accordance with one of the previous claims,
**characterized in that**,
the prespecified set of rules is embodied such that the time stamp (TS) allocated to the connection information (QID) is organized in a prespecified sequence.

## Revendications

1. Procédé pour le transfert optimisé de cellules ATM sur des sections de connexion,
comprenant une pluralité de files d'attente (W₁ ... Wₙ), dans lesquelles sont mémorisées des cellules ATM portant des informations de connexion (QID), ainsi qu'un dispositif de calendrier, qui est formé par une autre file d'attente (WQ), par un classeur (RR) ainsi que par un dispositif de classement (SQ), et dans lequel des informations de connexion (QID) sont classées selon une règle d'ordre prédéfinie,
**caractérisé en ce**
**que** l'information de connexion (QID) est, le cas échéant, prélevée sur les cellules ATM mémorisées dans l'une des files d'attente, selon au moins un critère de prélèvement, dépendant du niveau de remplissage, pour une file d'attente (W₁ ...Wₙ) ou pour le dispositif de classement (SQ),
**que** l'information de connexion (QID) est munie d'un marquage temporel (TS) représentatif, pour le moment auquel la cellule ATM correspondante affectée doit être multiplexée au plus tard sur la section de connexion, et qu'elle est amenée à l'extrémité supérieure de l'autre file d'attente (WQ), et
**que** l'information de connexion (QID) est insérée dans le dispositif de classement (SQ) selon un nombre prédéfini d'opérations de comparaison, en tenant compte de la règle d'ordre prédéfinie.

2. Procédé selon la revendication 1,
**caractérisé en ce**
**que** l'au moins un critère de prélèvement est exécuté de telle manière que, au cas où une cellule ATM est amenée à une file d'attente vide (Wₓ), l'information de connexion (QID) de cette cellule est transmise à l'extrémité supérieure de l'autre file d'attente, en commun avec le marquage temporel (TS) respectivement affecté.

3. Procédé selon la revendication 1, 2,
**caractérisé en ce**
**qu'**un autre critère de prélèvement est exécuté de telle manière que l'information de connexion (QID) est amenée à l'autre file d'attente (WQ) uniquement lorsqu'une information de connexion (QID) exécutée de la même manière quitte le dispositif de calendrier.

4. Procédé selon les revendications 1 à 3,
**caractérisé en ce**
**que** le nombre prédéfini d'opérations de comparaison est exécuté dans un intervalle de temps défini (Δt).

5. Procédé selon l'une quelconque des revendications précédentes,
**caractérisé en ce**
**que** le dispositif de classement (SQ) est organisé comme une liste enchaînée, un premier indicateur (HOL) définissant l'extrémité supérieure et un deuxième indicateur (HOF) définissant des éléments de mémoire libres.

6. Procédé selon l'une quelconque des revendications précédentes,
**caractérisé en ce**
**que** la règle d'ordre prédéfinie est exécutée de telle manière que la valeur de temps (TS) affectée aux informations de connexion (QID) est organisée dans un ordre prédéfini.
